Europäisches Patentamt

European Patent Office

Office européen des brevets

(11) Veröffentlichungsnummer: **0 300 129**
A2

# (12) EUROPÄISCHE PATENTANMELDUNG

(21) Anmeldenummer: 88103530.7

(22) Anmeldetag: 07.03.88

(51) Int. Cl.⁴: **B29C 49/20 , B29D 31/00**

(30) Priorität: 21.07.87 DE 3724114

(43) Veröffentlichungstag der Anmeldung:
25.01.89 Patentblatt 89/04

(84) Benannte Vertragsstaaten:
DE ES FR GB IT

(71) Anmelder: **BAVARIA CARGO TECHNOLOGIE GMBH**
**Kirschstrasse 20**
**D-8000 München 50(DE)**

(72) Erfinder: **Huber, Thomas**
**Schechen 2a**
**D-8127 Iffeldorf(DE)**

(74) Vertreter: **Uri, Peter Alexander, Dipl.-Ing. et al**
**Patentanwälte Strohschänk, Uri & Strasser**
**Innere Wiener Strasse 8**
**D-8000 München 80(DE)**

(54) Verfahren zur Herstellung einer Tragrolle.

(57) Zur Erleichterung der Herstellung und zur Verringerung des Gewichts einer Tragrolle aus einem etwa hohlzylindrischen Rollenkörper und jeweils zentrisch in dessen beiden axialen Stirnenden festgelegten Wälzlager wird der Rollenkörper aus Kunststoffmaterial hergestellt. Dazu werden zunächst auf einem Formdorn die beiden im Abstand angeordneten Wälzlager und der dazwischenliegende Teil des Formdorns mit einem thermoplastischem Material in geeigneter Dicke umhüllt. Nach Entfernen des Formdorns wird dieser Rohling in eine Blasform mit der gewünschten Innenkontur der fertigen Tragrolle eingebracht und es wird nach erneutem Plastifizieren des Kunststoffs durch den vom Formdorn gebildeten Kanal ein Druckgas eingeblasen, so daß sich das Kunststoffmaterial an den Formhohlraum der Blasform anschmiegt und dadurch die fertige Tragrolle gebildet wird.

Fig. 1

## Verfahren zur Herstellung einer Tragrolle

Die Erfindung betrifft ein Verfahren zur Herstellung einer Tragrolle, insbesondere für Rollenförderbahnen, wobei die Tragrolle aus einem etwa hohlzylindrischen Rollenkörper und jeweils zentrisch in dessen beiden axialen Stirnenden festgelegten Wälzlagern besteht.

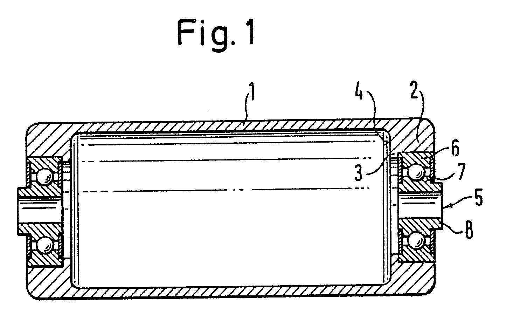

Derartige Tragrollen werden auf einer in die Innenringe der Wälzlager passenden Lagerachse insbesondere in Rollenförderbahnen bei Frachtladesystemen im Luftfrachtverkehr eingesetzt. Eine herkömmliche, nach dem Stand der Technik bekannte Rolle dieser Art ist in der Fig. 1 der Zeichnung dargestellt. Sie besteht aus einem etwa hohlzylindrischen Körper 1 aus Metall, gewöhnlich aus Aluminium oder einer Aluminiumlegierung, der im Bereich seiner axialen Stirnenden jeweils einen radial einwärts ragenden Flansch 2 größerer Dicke als der übrige Teil des Rollenkörpers 1 besitzt. In diesen radialen Flansch 2 ist jeweils an beiden Stirnseiten des Rollenkörpers 1 von außen her ein Wälzlager 5 eingepaßt, das sich axial einwärts an einer am radialen Flansch 2 gebildeten Anschlagschulter 3 abstützt. Der äußere Laufring 6 ist im Preßsitz mit der inneren Umfangsfläche des radialen Flansches 2 angebracht. Der innere Laufring 7 ist mit einem axial nach auswärts ragenden Lagerbund 8 versehen, der als Abstandselement dient.

Bei dieser Ausführungsform ist, wie erwähnt, die Wandstärke des Rollenkörpers 1 zwischen den beiden radialen Flanschen 2 wesentlich geringer, als die radiale Dicke der Flansche 2, um Gewicht zu sparen,da dies im Luftfrachtverkehr ein vordringliches Erfordernis ist.

Derartige bekannte Tragrollen werfen in der Praxis eine Reihe von Problemen auf. Zum einen ist die Herstellung des Rollenkörpers 1 aus Metall außerordentlich aufwendig, da der Rollenkörper aus dem vollen oder einem Rohrmaterial gedreht werden muß, wobei eine erhebliche Dreharbeit mit viel Materialabfall erforderlich ist und es sich überdies als sehr schwierig gestaltet, die hinterschnittene Fläche 4 zwischen dem radialen Flansch 2 und dem angrenzend dünnwandigen Rollenkörper 1 auf einer Drehbank herzustellen. Die Herstellung eines derartigen Rollenkörpers im Gußverfahren verbietet sich, da weder die notwendige Genauigkeit noch die nötige Festigkeit erzielbar sind.

Ein weiteres Problem ergibt sich dadurch, daß die in den radialen Flansch 2 eingesetzten Wälzlager 5 zwar axial einwärts durch die Anschlagschulter 3 festgelegt sind, daß sie jedoch radial auswärts keine Abstützung haben und daher dazu neigen, "auszuwandern".

Die der Erfindung zugrundeliegende Aufgabe besteht darin, ein Verfahren zur Herstellung einer Tragrolle der eingangs genannten Gattung zu schaffen, mit dem auf einfache Weise Tragrollen geringen Gewichts und hoher Zuverlässigkeit herstellbar sind.

Gemäß der Erfindung wird diese Aufgabe dadurch gelöst, daß zuerst die beiden Wälzlager im Abstand zueinander auf einen dem Innendurchmesser ihrer inneren Laufringe angepaßten Formdorn aufgesetzt werden und diese Anordnung in eine Form eingebracht wird, deren Formhohlraum die Umfangsflächen und die axial inneren Seitenflächen der Wälzlager sowie den zwischen den Wälzlagern freiliegenden Formdorn im Abstand umgibt, daß hierauf der Formhohlraum mit thermoplastischem Kunststoffmaterial gefüllt wird, daß nach dessen Verfestigung die Form und der Formdorn entfernt werden und der gebildete Rohling in eine Blasform eingesetzt wird, deren Formhohlraum den Außenkonturen der fertigen Tragrolle angepaßt ist, daß nun durch den vom Formdorn gebildeten Kanal das wiederplastifizierte Kunststoffmaterial durch Einleitung von Druckgas aufgeblasen wird, bis es dem Formhohlraum in Gestalt des fertigen Rollenkörpers anliegt, und daß schließlich die fertige Tragrolle nach Verfestigung entformt wird.

Durch diese erfindungsgemäße Ausgestaltung des Verfahrens ist es möglich, den Rollenkörper aus einem Kunststoffmaterial um die Wälzlager herum und mit diesen haftend verbunden derart zu formen, daß ein schwer entfernbarer Kern für das Innere des hohlen Rollenkörpers unnötig ist. Der aus Kunststoff geformte Rollenkörper zeichnet sich gegenüber dem herkömmlichen Rollenkörper aus Metall durch äußerst geringes Gewicht, hohe Abriebfestigkeit und eine durch seine Elastizität bedingte Widerstandsfähigkeit gegen Schläge und Beschädigungen aus.

Bevorzugt ist es bei dem erfindungsgemäßen Verfahren, daß das thermoplastische Kunststoffmaterial faserverstärkt ist, wobei vorzugsweise eines der folgenden Materialien verwendet wird: Polyamid-Imid mit 40 % Faseranteil, Polyamid mit 33 % Faseranteil, Polyphenylensulfid mit 40 % Faseranteil oder Polyetheretherketon mit 30 % Faseranteil. Diese Materialien zeichnen sich durch gute Formbarkeit, gute Haftungseigenschaften an den Wälzlagern und vor allem durch äußerst hohe Abriebfestigkeit und Zähigkeit aus, so daß sie für den rauhen Frachtladebetrieb bevorzugt geeignet sind.

Der Faseranteil der Kunststoffmaterialien besteht vorzugsweise aus Glas- oder Kohlenstofffasern, wobei jedoch auch andere zur Verstärkung geeignete Kunstfasern wie beispielsweise Aramid-Fasern geeignet sind.

Bei einer besonders vorteilhaften Verfahrensführung ist vorgesehen, daß zum Aufblasen ein dem Kanaldurchmesser angepaßtes Blasrohr mit einem axialen Kanal und davon ausgehend radialen Bohrungen in den Kanal eingesetzt wird. Die Praxis zeigt, daß hierbei ein besonders gleichmäßiger Aufblasvorgang gewährleistet ist.

Von Vorteil ist es, wenn der äußere Laufring der verwendeten Wälzlager mit einer Umfangsnut versehen ist, in welche beim ersten Formungsschritt das thermoplastische Material unter Bildung eines ringförmigen trapezförmigen Ansatzes am radialen Flansch des Rollenkörpers eindringt. Durch diese formschlüssige Verbindung von Rollenkörper und Wälzlager wird eine zuverlässige Festlegung der Wälzlager im Rollenkörper in beiden axialen Richtungen gewährleistet. Zur Erleichterung des Eindringens des thermoplastischen Materials bei der Formung ist bevorzugt vorgesehen, daß sich die Umfangsnut im äußeren Laufring des Wälzlagers im Querschnitt trapezförmig radial auswärts erweitert.

Um ein Eindringen des plastifizierten thermoplastischen Materials in das Innere der Wälzlager mit Sicherheit auszuschließen, können Wälzlager mit einem geschlossenen Käfig verwendet werden.

Die Erfindung wird im folgenden beispielsweise unter Bezugnahme auf die Zeichnung näher erläutert; es zeigt:

Fig. 1 eine nach dem Stand der Technik herkömmliche Tragrolle;

Fig. 2 eine Darstellung zur Erläuterung des ersten Verfahrensschrittes des erfindungsgemäßen Verfahrens, bei dem die Anordnung aus Formdorn und Wälzlagern mit thermoplastischem Material umhüllt wird;

Fig. 3 eine Darstellung zur Erläuterung des zweiten erfindungsgemäßen Verfahrensschrittes, bei dem die vorher geformte Schicht thermoplastischen Materials zur Bildung des hohlzylindrischen Rollenkörpers in einer Blasform aufgeblasen wird; und

Fig. 4 die nach dem Verfahren hergestellte Tragrolle im axialen Längsschnitt.

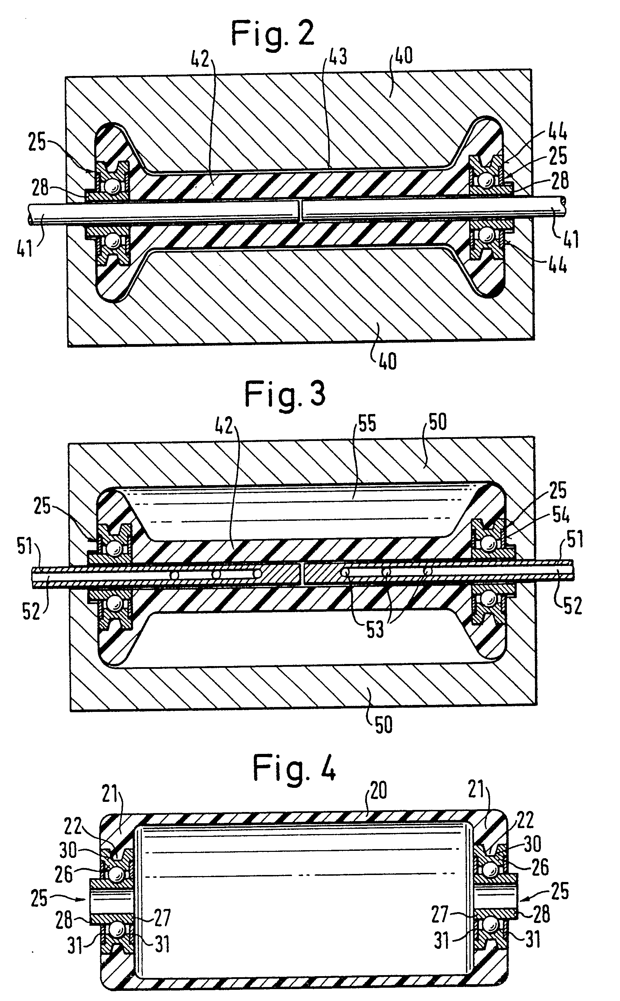

Wie in der Fig. 4 gezeigt ist, besteht die nach dem erfindungsgemäßen Verfahren hergestellte Tragrolle aus einem aus Kunststoff geformten etwa hohlzylindrischen Rollenkörper 20, der an beiden axialen Stirnenden jeweils nach innen ragend einen radialen Flansch 21 größerer radialer Dicke als der übrige Rollenkörper 20 besitzt. An der radialen Innenseite jedes radialen Flansches ist ein ringförmig, im Querschnitt trapezförmiger Ansatz 22 angeformt, der in eine trapezförmige Nut 30 im äußeren Laufring 26 eines in den radialen Flansch 21 eingesetzten Wälzlagers 25 eingreift. Durch die besondere Art der nachstehend beschriebenen Herstellung ist die äußere Umfangsfläche des äußeren Laufrings 26 fest haftend mit der radial inneren Oberfläche des radialen Flansches 21 des Rollenkörpers verbunden.

Wie gezeigt, ist der innere Laufring 27 des Wälzlagers 25 radial auswärts zur Bildung eines Lagerbundes 28 verlängert, so daß er über die radiale Stirnfläche der Tragrolle hinausragt und als Abstandselement und Lagerelement für die Lagerung einer Tragrolle in einer Rollenförderbahn genutzt werden kann. Das Wälzlager 25 ist mit einem geschlossenen Käfig 31 versehen, der einerseits im praktischen Einsatz das Eindringen von Verunreinigungen verhindert und andererseits aber auch bei dem nachstehend beschriebenen Herstellungsverfahren das Eindringen des zur Herstellung des Rollenkörpers 20 verwendeten thermoplastischen Materials im plastifizierten Zustand.

Bei der praktischen Verwendung einer derartigen Tragrolle in einer Rollenförderbahn wird eine durchgehende Rollenachse im Gleitpaßsitz in die inneren Laufringe 27 der Wälzlager 25 derart eingesetzt, daß ihre beiden Enden als Achsstummel zur Lagerung beiderseits wegragen. Eine besondere Festlegung der Tragrolle auf dieser Lagerachse ist nicht erforderlich, da die axiale Führung durch den Lagerbund 28 sichergestellt ist.

Zur Herstellung einer derartigen Tragrolle werden zunächst in vorbestimmtem Abstand zueinander zwei Wälzlager 25 auf einen Formdorn 41 derart aufgesetzt, daß ihr Lagerbund 28 jeweils nach außen ragt, siehe Fig. 2. Diese Anordnung aus Formdorn 41 und den beiden Wälzlagern 25 wird nun, wie in der Fig. 2 gezeigt ist, in eine Form 40 eingesetzt, deren Formhohlraum 43 die radial äußeren Umfangsflächen und die axial einander zugewandten Seitenflächen der Wälzlager 25, sowie den zwischen diesen Wälzlagern freiliegenden Formdorn 41 im Abstand umgibt, während die radial stirnseitigen Wände des Formhohlraums genau passend an den axial äußeren Seitenflächen der Wälzlager 25 und am jeweiligen Lagerbund 28, sowie auf dem axial nach außen ragenden Formdorn 41 anliegen, wie bei 44 in der Fig. 2 dargestellt.

Nach dem Schließen der Form wird der freigebliebene Formhohlraum 43 mit einem plastifizierten thermoplastischen Kunststoffmaterial vollständig gefüllt.

Nach Verfestigung dieses Kunststoffmaterials werden die Form 40 und der Formdorn entfernt. Zur Erleichterung dieses Entformungsvorgangs ist die Form 40 zwei- oder mehrteilig ausgebildet und auch der Formdorn 41 kann in der Mitte geteilt sein, wie in der Fig. 2 angedeutet.

Der auf diese Weise erhaltene Rohling aus den beiden Wälzlagern 25 und der diese zusammenhaltenden verfestigten Kunststoffmasse weist einen durch den Formdorn 41 gebildeten axialen Kanal auf, in den nun ein passendes Blasrohr 51 eingesetzt wird.. Dieses Blasrohr weist einen axialen Kanal 52 und mehrere über seine Länge verteilte radiale Bohrungen 53 auf, die mit dem axialen Kanal in Verbindung stehen. Die so gebildete Anordnung wird nun in eine Blasform 50 eingesetzt, wie in der Fig. 3 gezeigt. Der Formhohlraum 55 dieser Blasform umgibt die eingesetzte Anordnung in einer Gestalt, die umfangsmäßig der Gestalt des herzustellenden Rollenkörpers 20 entspricht. Wiederum ist der Formhohlraum 55 derart gestaltet, daß er an den axial äußeren Seitenflächen der Wälzlager 25 und an deren Lagerbund 28, sowie auf dem axial außen überstehenden Blasrohr 52 dicht anliegt, wie bei 54 in der Fig. 3 angedeutet.

Nach erneutem Plastifizieren der Kunststoffmasse 42 wird nun durch den axialen Kanal 52 und die radialen Bohrungen 53 im Blasrohr 51 ein Druckgas, beispielsweise Druckluft, eingeleitet, die an die Zwischenfläche zwischen der Kunststoffmasse 42 und dem Blasrohr gelangt, wodurch die plastizierte Kunststoffmasse 42 derart radial nach außen verformt wird, daß sie sich schließlich an die Innenkontur des Formhohlraums 55 in Gestalt des Rollenkörpers 20 anlegt.

Nach Verfestigung der Kunststoffmasse wird die Blasform 50 abgenommen und das Blasrohr 51 wird entfernt. Zur Erleichterung dieses Entformungsvorgangs ist vorgesehen, daß die Blasform zweiteilig oder mehrteilig ausgebildet ist. Auch das Blasrohr 51 kann etwa mittig unterteilt sein, wie in der Fig. 3 gezeigt.

Es liegt nun eine fertige Tragrolle vor, wie in der Fig. 4 gezeigt, die im allgemeinen nur geringer oder keiner Nachbearbeitung bedarf.

**Ansprüche**

1. Verfahren zur Herstellung einer Tragrolle, insbesondere für Rollenförderbahnen, wobei die Tragrolle aus einem etwa hohlzylindrischen Rollenkörper und jeweils zentrisch in dessen beiden axialen Stirnenden festgelegten Wälzlagern besteht, dadurch **gekennzeichnet,** daß zuerst die beiden Wälzlager (25) im Abstand zueinander auf einen dem Innendurchmesser ihrer inneren Laufringe (27) angepaßten Formdorn (41) aufgesetzt werden und diese Anordnung (25, 41) in eine Form eingebracht wird, deren Formhohlraum die Umfangsflächen und die axial inneren Seitenflächen der Wälzlager (25) sowie den zwischen den Wälzlagern freiliegenden Formdorn (41) im Abstand umgibt, daß hierauf der Formhohlraum mit thermoplastischem Kunststoffmaterial (42) gefüllt wird, daß nach dessen Verfestigung die Form (40) und der Formdorn (41) entfernt werden und der gebildete Rohling (25, 42) in eine Blasform (50) eingesetzt wird, deren Formhohlraum (55) den Außenkonturen der fertigen Tragrolle angepaßt ist, daß nun durch den vom Formdorn (41) gebildeten Kanal das wiederplastifizierte Kunststoffmaterial durch Einleitung von Druckgas aufgeblasen wird, bis es dem Formhohlraum (55) in Gestalt des fertigen Rollenkörpers (20) anliegt, und daß schließlich die fertige Tragrolle nach Verfestigung entformt wird.

2. Verfahren nach Anspruch 1, dadurch **gekennzeichnet,** daß das thermoplastische Kunststoffmaterial faserverstärkt ist.

3. Verfahren nach Anspruch 1 oder 2, dadurch **gekennzeichnet,** daß als Kunststoffmaterial eines der folgenden Materialien verwendet wird: Polyamid-Imid mit 40 % Faseranteil, Polyamid mit 33 % Faseranteil, Polyphenylensulfid mit 40 % Faseranteil oder Polyetheretherketon mit 30 % Faseranteil.

4. Verfahren nach Anspruch 2 oder 3, dadurch **gekennzeichnet,** daß die Fasern Glas- oder Kohlenstofffasern sind.

5. Verfahren nach einem der vorhergehenden Ansprüche, dadurch **gekennzeichnet,** daß zum Aufblasen ein dem Kanaldurchmesser angepaßtes Blasrohr (51) mit einem axialen Kanal (52) und davon ausgehend radialen Bohrungen (53) in den Kanal eingesetzt wird.

6. Verfahren nach einem der vorhergehenden Ansprüche, dadurch **gekennzeichnet,** daß der äußere Laufring (26) der verwendeten Wälzlager (25) mit einer Umfangsnut (30) versehen ist.

7. Verfahren nach Anspruch 6, dadurch **gekennzeichnet,** daß sich die Umfangsnut (30) im Querschnitt trapezförmig radial auswärts erweitert.

8. Verfahren nach einem der vorhergehenden Ansprüche, dadurch **gekennzeichnet,** daß die Wälzlager (25) mit einem geschlossenen Käfig (31) ausgestattet sind.

9. Tragrolle, insbesondere für Rollenförderbahnen, mit einem im wesentlichen hohlzylindrischen Rollenkörper, in dessen beiden axialen Stirnenden jeweils ein Wälzlager zentrisch gehaltert ist, dadurch **gekennzeichnet,** daß der äußere Laufring (26) jedes Wälzlagers (25) mit einer äußeren Umfangsnut (30) versehen ist, und daß der Rollenkörper(20) aus Kunststoff formschlüssig in die Umfangsnut (30) eingreifend und die äußeren Umfangsflächen der äußeren Laufringe (26) umschließend geformt ist.

# Fig. 1

## Fig. 2

## Fig. 3

## Fig. 4